# EUROPEAN PATENT SPECIFICATION

(11) **EP 4 628 171 B1**
(45) Date of publication and mention of the grant of the patent: **20.05.2026**
(21) Application number: 24174682.5
(22) Date of filing: 07.05.2024
(51) Int. Cl.: A63B 21/072

(54) **PLUG-IN WEIGHTED DUMBBELL**
PLUG-IN-GEWICHTETE HANTEL
HALTÈRE LESTÉ À INSERTION

(30) Priority: 02.04.2024 US 202418624183
(43) Date of publication of application: 08.10.2025
(73) Proprietor: Shandong Aochuang Fitness Equipment Co., Ltd., Dezhou Shandong 253400 (CN)
(72) Inventor: YANG, Chunyu, Dezhou, 253400 (CN)
(74) Representative: Bayramoglu et al.

(56) References cited:
- CN-A- 107 469 276
- CN-A- 111 467 735
- US-B1- 7 182 716

## Description

### TECHNICAL FIELD

The present invention relates to the technical field of fitness equipment, in particular to a plug-in weighted dumbbell.

### BACKGROUND

Among the existing fitness equipment, dumbbells are the most commonly used equipment for exercising arm strength. At present, to adjust the use weight of dumbbells, detachable adjustment is usually adopted to achieve the addition or reduction of the dumbbell plates. The more common way now involves a plug-in or a twisting method to replace the dumbbell plates. However, the two methods for replacing dumbbells have technical defects, which are specifically as follows:
1. In the case of the plug-in method, exemplified by the dumbbell structure with Publication No. CN217139101U, a lock catch clamping structure is required to be provided on dumbbell plates during the plugging-in. Such a structure is complex, resulting in an increased unit price of the product, which is not conducive to commercial promotion.
2. In the case that the twisting method is adopted to adjust the weight of the dumbbell, a center hole is formed on each weight plate for the traditional dumbbell. When the weight needs to be adjusted, the adjusting nuts on the two sides need to be completely unscrewed from the handle, then the dumbbell plates are added or reduced before the adjusting nuts on the two sides are screwed in to lock. The operation is time-consuming and labor-consuming. Additionally, there is no connection between the adjacent weight plates, resulting in noise during use due to collisions between adjacent weight plates.

Aiming at the defects in the prior art, as a development and design company of fitness equipment, the technical problem to be solved at present is how to adjust the product structure according to the existing adjustable-weight dumbbell structure and simply the operation without increasing structural complexity, so that the replacement of dumbbell plates is more convenient and quicker. CN111467735A discloses a dumbbell with dumbbell pieces convenient to be loaded or unloaded. The dumbbell comprises a dumbbell assembly, wherein the dumbbell body comprises a dumbbell rod, limiting panels are fixedly connected with two sides of the dumbbell rod, placing sleeve grooves are formed in one end, far away from the dumbbell rod, of the limiting panels, an end, away from the dumbbell rod, of a limiting block is fixedly connected with a bearing rod, a plurality of dumbbell pieces matched with the placing sleeve grooves are uniformly arranged on the bearing rod, the bearing rod is sleeved with a fixing sleeve, the dumbbell pieces are located in the placing sleeve grooves, the placing sleeve grooves are positioned between the fixing sleeve and the limiting panel, through grooves are formed in the dumbbell pieces, clamping grooves matched with the bearing rod are formed in bottom ends of the through grooves, the through grooves are communicated with the clamping grooves, a multi-groove panel is arranged at one end of the fixing sleeve, and grooves in the multi-groove panel are arc-shaped grooves. US7182716B1 discloses a dumbbell with quick release bolt. The dumbbell includes a tubular handle with a thread on the inside surface of the tube. A straight groove that cuts through the internal thread is also formed on the inside surface of the tubular handle. A stop plate is mounted on each end of the tubular handle. A pair of retainers are provided, each retainer being a shaft with a retainer plate on one end. Each shaft has a partial thread on its outside surface extending the length of the respective shaft. A weight plate stack is mounted on the shaft and the shaft is securely inserted into the tubular handle by aligning the partial thread with the groove, sliding the shaft through openings in the weight plates into the tubular handle, then rotating each shaft to where the partial thread on the shaft engages the interior thread of the tubular handle. CN107469276A discloses a multi-functional multi-handle weight-adjustable dumbbell. The dumbbell includes a middle handle, the two sides of the middle handle are connected with dumbbell piece bases, three side handles are connected between the dumbbell piece bases and uniformly arranged on the outer side of the middle handle, baffles on the outer sides of the dumbbell piece bases are provided with through holes, rotating supporting rods are arranged in the through holes, the front ends of the rotating supporting rods are provided with outer threads, and the outer threads are matched and fixedly connected with inner threads in central holes of baffles on the inner sides of the dumbbell piece bases; the dumbbell piece bases are internally provided with several dumbbell pieces, the dumbbell pieces are provided with grooves and connected with the rotating supporting rods through the grooves in a clamping mode, the inner sides of the dumbbell piece bases are provided with serrated clamping grooves, the serrated clamping grooves are matched with the edges of the dumbbell pieces so that the dumbbell pieces can be fixed, and two fan-shaped grooves are symmetrically formed in the baffles on the outer side.

### SUMMARY

The present invention aims to solve the defects in the prior art and provides a plug-in weighted dumbbell according to claim 1.

In order to achieve the above objective, the present invention adopts the following technical solutions:
Provided is a plug-in weighted dumbbell, including a dumbbell bar and dumbbell plates, wherein radial plug-in grooves are formed on the dumbbell plates; the dumbbell bar includes a gripping part and adjusting parts, with the adjusting parts in threaded connection with the gripping part; a screwing part is provided at one end of each of the adjusting parts distal to the gripping part; the dumbbell plates are configured to be detachably mounted on the adjusting parts through the radial plug-in grooves, and two fixed dumbbell plates are fixedly connected to the gripping part, such that the two fixed dumbbell plates limit the position of the dumbbell plates. Through holes are formed on the dumbbell plates, and each of the through holes has a two-segment structure, with a first segment being a threaded hole and a second segment being a blind hole; the threaded hole and the blind hole are coaxially formed on two opposite side surfaces of the dumbbell plates; the threaded hole is detachably provided with a positioning bolt, and the blind hole is used as a plug-in groove; a nut on the positioning bolt is used as a plug-in protrusion to be axially plugged in and matched with the blind hole.

Further, preferably, a plurality of the dumbbell plates are provided on the adjusting parts in a plug-in manner; the screwing parts are used for fixing the dumbbell plates on the outermost side, and the fixed dumbbell plates are used for fixing the dumbbell plates on the innermost side.

Furthermore, preferably, the dumbbell plate is provided with at least two through holes and two positioning bolts, and the blind holes are formed on one side distal to the gripping part; the blind holes are formed on the fixed dumbbell plate.

Further, preferably, knurls are formed on both the gripping part and the screwing parts.

Further, preferably, a carrying hole is formed on the dumbbell plate, a convenient removal groove is formed above the carrying hole, and the convenient removal grooves on two adjacent dumbbell plates form a convenient removal hole.

Further, preferably, the adjusting parts include sleeve pipes, and the sleeve pipes are fixedly connected to both ends of the gripping part; several second insertion plates are provided on an outer wall of the sleeve pipe and a screw rod is internally and threadedly connected to the sleeve pipe; an end of the screw rod is fixedly connected to the screwing part; one end of the screw rod close to the screwing part is a plain shaft, a rotating disc is provided on the plain shaft, and several first insertion plates are provided on the rotating disc; the first insertion plate matches a gap between two adjacent second insertion plates.

Furthermore, preferably, the first insertion plates and the second insertion plates are both arc-shaped plates; an arc-shaped transition is provided at an edge of one end of the first insertion plate distal to the rotating disc, and an arc-shaped transition is provided at an edge of one end of the second insertion plate close to the rotating disc.

### Beneficial Effects

Compared with the prior art, the present invention has the following beneficial effects: A radial plug-in groove is formed on the dumbbell plate, and threaded holes and blind holes are coaxially formed on the two side surfaces of the dumbbell plate, with the blind hole being used as a plug-in groove. After twisting a screw into the threaded hole, the nut is used as the plug-in protrusion to be axially plugged in and matched with the blind hole, so that the rapid installation and fixation of the dumbbell plate are achieved. The first insertion plate is aligned to the gap between the second insertion plates by rotating the rotating disc, and the first insertion plate is inserted into the gap. The connecting portion of the two types of insertion plates forms a circular structure, and at this point, the rotation of the rotating disc is restricted from further rotation. The screw rod in the adjusting part is then twisted into the sleeve pipe, allowing them to be connected. The adjusting part is adjusted to a proper length before the dumbbell plates are installed. The dumbbell plates are directly inserted into the gripping part. Upon completing the insertion, the screwing part is then controlled to tightly attach to the dumbbell plates, fixing the dumbbell plates. When the number of the dumbbell plates needs to be adjusted, only the screwing part needs to be rotated to extend or shorten the length of the adjusting part. By providing such a structure, the length of the adjusting part can be adjusted at will to accommodate multiple dumbbell plates.

### BRIEF DESCRIPTION OF THE DRAWINGS

The accompanying drawings, which are included to provide a further understanding of the present invention and constitute a part of this specification, are used to explain the present invention together with the embodiments of the present invention, and do not constitute a limitation to the present invention.
FIG. 1 is a schematic diagram of the overall structure of a plug-in weighted dumbbell.
FIG. 2 is a schematic structural diagram of a dumbbell bar according to Embodiment 1.
FIG. 3 is a schematic structural diagram of a dumbbell plate.
FIG. 4 is a schematic structural diagram of a dumbbell bar according to Embodiment 2.

In the figures: 1. dumbbell plate; 2. screwing part; 3. convenient removal hole; 4. gripping part; 5. through hole; 6. positioning bolt; 7. carrying hole; 8. convenient removal groove; 9. radial plug-in groove; 10. screw rod; 11. first insertion plate; 12. sleeve pipe; and 13. second insertion plate.

### DETAILED DESCRIPTION OF THE EMBODIMENTS

The technical solutions in the embodiments of the present invention will be clearly and completely described below with reference to the accompanying drawings in the embodiments of the present invention, and it is obvious that the described embodiments are only a part of the embodiments of the present invention but not all of them.

In the description of the present invention, it should be understood that directional or positional relationships indicated by terms such as "upper", "lower", "front", "rear", "left", "right", "top", "bottom", "in", "out", and the like are based on the direction or position shown in the accompanying drawings. They are merely intended to facilitate and simplify description rather than indicate or imply that the indicated device or element must have a specific direction and be structured and operated according to the specific direction, and therefore should not be construed as limiting the present invention.

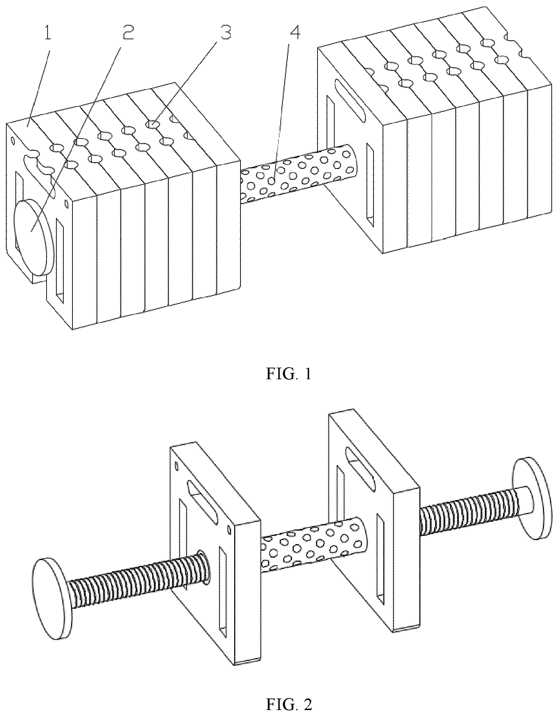

### Embodiment 1: With reference to FIGS. 1 to 3

Provided is a plug-in weighted dumbbell, including a dumbbell bar and dumbbell plates. Radial plug-in grooves are formed on the dumbbell plates. The dumbbell bar includes a gripping part and adjusting parts, with the adjusting parts in threaded connection with the gripping part. A screwing part is provided at one end of each adjusting part distal to the gripping part. The dumbbell plates are detachably provided on the adjusting parts through the radial plug-in grooves, and two fixed dumbbell plates are fixedly connected to the gripping part, with the fixed dumbbell plates being used to limit the position of the dumbbell plates. The adjusting parts are directly inserted into the gripping part, and the dumbbell plates are supported by the adjusting parts, where the fixed dumbbell plates are positioned at the edge of the gripping part.

In other preferred embodiments, the two fixed dumbbell plates are fixedly connected to the gripping part 4, and the fixed dumbbell plates are used to limit the position of the dumbbell plate 1. The structure of the fixed dumbbell plates should be similar to that of the dumbbell plates 1, and the fixed dumbbell plate can be placed on a flat surface before installing the dumbbell plates 1 to provide support for the dumbbell bar, ensuring stability when the dumbbell plates 1 are inserted downwards.

Radial plug-in grooves 9 are formed on the dumbbell plates 1, the adjusting parts are provided with a plurality of dumbbell plates 1 in a plug-in manner. The screwing parts 2 are used for fixing the dumbbell plates 1 on the outermost side, and the fixed dumbbell plates are used for fixing the dumbbell plates 1 on the innermost side. The friction force between the dumbbell plates 1 can be increased through the coordination of the screwing parts 2 and the fixed dumbbell plates, so that the fixing effect of the dumbbell plates 1 is improved.

Specifically, the through hole 5 has a two-segment structure, with one segment being a threaded hole and the other segment being a blind hole. The threaded hole is detachably provided with a positioning bolt 6, and the blind hole is used as a plug-in groove. The nut on the positioning bolt 6 is used as a plug-in protrusion to be axially plugged in and matched with the blind hole. When in use, the screw rod portion of the positioning bolt 6 is installed in the threaded hole, forming a structure of plug-in protrusion on the dumbbell plate 1. The nut portion is then aligned to the blind hole, and the dumbbell plates 1 are installed in sequence.

Furthermore, the dumbbell plate 1 is provided with at least two through holes 5 and two positioning bolts 6, and the blind holes are formed on one side distal to the gripping part 4; the blind holes are formed on the fixed dumbbell plates 1.

In other preferred embodiments, knurls are formed on both the gripping part 4 and the screwing parts 2. The knurling can improve the friction force between the gripping part 4 and the screwing parts 2, facilitating gripping and screwing.

In other preferred embodiments, a carrying hole 7 is formed on the dumbbell plate 1, a convenient removal groove 8 is formed above the carrying hole 7, and the convenient removal grooves 8 on two adjacent dumbbell plates 1 form a convenient removal hole 3. The carrying hole 7 is formed for easy handling of the dumbbell plate 1, and the convenient removal groove 8 is formed for fingers to reach into the carrying hole 7 when detaching the dumbbell plate 1.

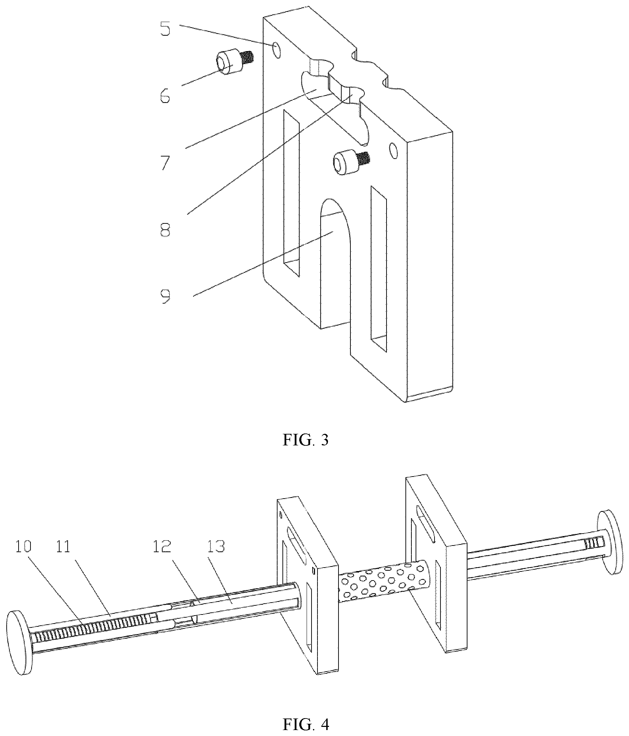

### Embodiment 2: With reference to FIG. 4

Differing from Embodiment 1, provided is a plug-in weighted dumbbell, including a dumbbell bar and dumbbell plates 1. Radial plug-in grooves 9 are formed on the dumbbell plates 1. The dumbbell bar includes a gripping part 4 and adjusting parts. The dumbbell plates 1 are detachably provided on the adjusting parts through the radial plug-in grooves 9. The adjusting parts include sleeve pipes 12, and the sleeve pipes 12 are fixedly connected to both ends of the gripping part 4, with several second insertion plates 13 provided on the outer wall of the sleeve pipe 12 and a screw rod 10 internally and threadedly connected to the sleeve pipe 12. The end of the screw rod 10 is fixedly connected to a screwing part 2. One end of the screw rod 10 close to the screwing part 2 is a plain shaft, a rotating disc is provided on the plain shaft, and several first insertion plates 11 are provided on the rotating disc. The first insertion plate 11 matches the gap between two adjacent second insertion plates 13.

In other preferred embodiments, the first insertion plates 11 and the second insertion plates 13 are both arc-shaped plates. An arc-shaped transition is provided at the edge of one end of the first insertion plate 11 distal to the rotating disc, and an arc-shaped transition is provided at the edge of one end of the second insertion plate 13 close to the rotating disc. End parts of the two types of insertion plates are provided with arc-shaped transitions so as to insert the first insertion plate 11 into the second insertion plate 13. The two types of insertion plates are both arc-shaped plates and form a circular sleeve structure after matching so as to support the dumbbell plates 1.

When in use, the first insertion plate 11 is aligned to the gap between the second insertion plates 13 by rotating the rotating disc, and the first insertion plate 11 is inserted into the gap. The connecting portion of the two types of insertion plates forms a circular structure, and at this point, the rotation of the rotating disc is restricted from further rotation. The screw rod 10 in the adjusting part is then twisted into the sleeve pipe 12, allowing them to be connected. The adjusting part is adjusted to a proper length before the dumbbell plates 1 are installed. The dumbbell plates 1 are directly inserted into the gripping part 4. Upon completing the insertion, the screwing part 2 is then controlled to tightly attach to the dumbbell plates 1, fixing the dumbbell plates 1. When the number of the dumbbell plates 1 needs to be adjusted, only the screwing part 2 needs to be rotated to extend or shorten the length of the adjusting part.

The invention is defined by the appended claims.

## Claims

1. A plug-in weighted dumbbell, comprising a dumbbell bar and dumbbell plates (1), wherein the dumbbell bar comprises a gripping part (4) and adjusting parts, with the adjusting parts in threaded connection with the gripping part (4); a screwing part (2) is provided at an end of each of the adjusting parts distal to the gripping part (4); two fixed dumbbell plates are fixedly connected to the gripping part (4), such that the two fixed dumbbell plates limit positions of the dumbbell plates (1);
**characterized in that** radial plug-in grooves (9) are formed on the dumbbell plates (1), and the dumbbell plates (1) are configured to be detachably mounted on the adjusting parts through the radial plug-in grooves (9);
wherein through holes (5) are formed on the dumbbell plates (1), and each of the through holes (5) has a two-segment structure, with a first segment being a threaded hole and a second segment being a blind hole; the threaded hole and the blind hole are coaxially formed on two opposite side surfaces of the dumbbell plates (1); the threaded hole is detachably provided with a positioning bolt (6), and the blind hole is used as a plug-in groove; a nut on the positioning bolt (6) is used as a plug-in protrusion to be axially plugged in and matched with the blind hole.

2. The plug-in weighted dumbbell according to claim 1, **characterized in that** a plurality of the dumbbell plates (1) are provided on the adjusting parts in a plug-in manner; the screwing parts (2) are used for fixing the dumbbell plates (1) on an outermost side, and the fixed dumbbell plates are used for fixing the dumbbell plates (1) on an innermost side.

3. The plug-in weighted dumbbell according to claim 1, **characterized in that** each of the dumbbell plates (1) is provided with at least two through holes (5) and two positioning bolts (6), and the blind holes are formed on a side distal to the gripping part (4); the blind holes are formed on each of the two fixed dumbbell plates.

4. The plug-in weighted dumbbell according to claim 1, **characterized in that** knurls are formed on both the gripping part (4) and the screwing parts (2).

5. The plug-in weighted dumbbell according to claim 1, **characterized in that** a carrying hole (7) is formed on each of the dumbbell plates (1), a convenient removal groove (8) is formed above the carrying hole (7), and the convenient removal grooves (8) on two adjacent dumbbell plates (1) form a convenient removal hole (3).

6. The plug-in weighted dumbbell according to claim 1, **characterized in that** the adjusting parts comprise sleeve pipes (12), and the sleeve pipes (12) are fixedly connected to both ends of the gripping part (4); a plurality of second insertion plates (13) are provided on an outer wall of each of the sleeve pipes (12), and a screw rod (10) is internally and threadedly connected to each of the sleeve pipes (12); an end of the screw rod (10) is fixedly connected to the screwing part (2); an end of the screw rod (10) adjacent to the screwing part (2) is a plain shaft, a rotating disc is provided on the plain shaft, and a plurality of first insertion plates (11) are provided on the rotating disc; each of the plurality of first insertion plates (11) matches a gap between two adjacent second insertion plates (13) of the plurality of second insertion plates (13).

7. The plug-in weighted dumbbell according to claim 6, **characterized in that** the plurality of first insertion plates (11) and the plurality of second insertion plates (13) are arc-shaped plates; a first arc-shaped transition is provided at an edge of an end of each of the plurality of first insertion plates (11) distal to the rotating disc, and a second arc-shaped transition is provided at an edge of an end of each of the plurality of second insertion plates (13) adjacent to the rotating disc.

## Patentansprüche

1. Eine gewichtete Steckhantel, bestehend aus einer Hantelstange und Hantelscheiben (1), wobei die Hantelstange einen Griffteil (4) und Verstellteile aufweist und die Verstellteile mit dem Griffteil (4) verschraubt sind; an einem Ende jedes Verstellteils, das dem Griffteil (4) entfernt liegt, ist ein Schraubteil (2) vorgesehen; zwei feste Hantelscheiben sind fest mit dem Griffteil (4) verbunden, so dass die beiden festen Hantelscheiben die Positionen der Hantelscheiben (1) begrenzen;
**dadurch gekennzeichnet, dass** auf den Hantelscheiben (1) radiale Stecknuten (9) ausgebildet sind und die Hantelscheiben (1) so konfiguriert sind, dass sie über die radialen Stecknuten (9) lösbar an den Verstellteilen befestigt werden können;
wobei auf den Hantelscheiben (1) Durchgangslöcher (5) ausgebildet sind und jedes Durchgangsloch (5) eine zweisegmentige Struktur aufweist, wobei das erste Segment ein Gewindeloch und das zweite Segment ein Sackloch ist; das Gewindeloch und das Sackloch sind koaxial auf zwei gegenüberliegenden Seitenflächen der Hantelscheiben (1) ausgebildet; das Gewindeloch ist abnehmbar mit einer Positionierschraube (6) versehen, und das Sackloch dient als Stecknut; eine Mutter auf der Positionierschraube (6) dient als Steckvorsprung, der axial in das Sackloch eingesteckt und angepasst wird.

2. Die gewichtete Steckhantel nach Anspruch 1, **dadurch gekennzeichnet, dass** eine Vielzahl von Hantelscheiben (1) an den Verstellteilen als Steckverbindungen vorgesehen sind; die Schraubteile (2) dienen zur Befestigung der Hantelscheiben (1) an der Außenseite, und die festen Hantelscheiben dienen zur Befestigung der Hantelscheiben (1) an der Innenseite.

3. Die gewichtete Steckhantel nach Anspruch 1, **dadurch gekennzeichnet, dass** jede der Hantelscheiben (1) mit mindestens zwei Durchgangslöchern (5) und zwei Positionierungsbolzen (6) versehen ist und die Sacklöcher auf einer Seite distal zum Griffteil (4) ausgebildet sind; die Sacklöcher sind auf jeder der beiden festen Hantelscheiben ausgebildet.

4. Die gewichtete Steckhantel nach Anspruch 1, **dadurch gekennzeichnet, dass** sowohl am Griffteil (4) als auch an den Schraubteilen (2) Rändelungen ausgebildet sind.

5. Die gewichtete Steckhantel nach Anspruch 1, **dadurch gekennzeichnet, dass** auf jeder der Hantelscheiben (1) eine Trageöffnung (7) ausgebildet ist, oberhalb der Trageöffnung (7) eine praktische Entnahmenut (8) ausgebildet ist und die praktischen Entnahmenuten (8) auf zwei benachbarten Hantelscheiben (1) eine praktische Entnahmeöffnung (3) bilden.

6. Die gewichtete Steckhantel nach Anspruch 1, **dadurch gekennzeichnet, dass** die Verstellteile Hülsenrohre (12) umfassen, die an beiden Enden des Griffteils (4) fest verbunden sind; an der Außenwand jedes Hülsenrohrs (12) sind mehrere zweite Einsatzplatten (13) angeordnet, und mit jedem Hülsenrohr (12) ist eine Gewindestange (10) innenliegend und mittels Gewinde verbunden; ein Ende der Gewindestange (10) ist fest mit dem Schraubteil (2) verbunden; das dem Schraubteil (2) zugewandte Ende der Gewindestange (10) ist eine glatte Welle, und auf der glatten Welle ist eine Drehscheibe angeordnet; auf der Drehscheibe sind mehrere erste Einsteckplatten (11) vorgesehen; jede der mehreren ersten Einsteckplatten (11) passt in einen Spalt zwischen zwei benachbarten zweiten Einsteckplatten (13) der mehreren zweiten Einsteckplatten (13).

7. Die gewichtete Steckhantel nach Anspruch 6, **dadurch gekennzeichnet, dass** die Vielzahl der ersten Einsteckplatten (11) und die Vielzahl der zweiten Einsteckplatten (13) bogenförmige Platten sind; an einer Kante eines Endes jeder der Vielzahl erster Einsteckplatten (11), die von der Drehscheibe entfernt liegt, ist ein erster bogenförmiger Übergang vorgesehen, und an einer Kante eines Endes jeder der Vielzahl zweiter Einsteckplatten (13), die der Drehscheibe nahe liegt, ist ein zweiter bogenförmiger Übergang vorgesehen.

## Revendications

1. Haltère lesté extensible, composé d'une barre d'haltères et de plaques d'haltères (1), dans lequel la barre d'haltères comprend une partie de préhension (4) et des parties de réglage, les parties de réglage étant en raccord fileté avec la partie de préhension (4) ; une partie de vissage (2) est prévue à une extrémité de chacune des parties de réglage distale par rapport à la partie de préhension (4) ; deux plaques d'haltères fixes sont fixement reliées à la partie de préhension (4), de sorte que les deux plaques d'haltères fixes limitent les positions des plaques d'haltères (1) ;
**caractérisé en ce que** des rainures radiales d'extension (9) sont formées sur les plaques d'haltères (1), et que les plaques d'haltères (1) sont configurées pour être montées de manière amovible sur les parties de réglage via les rainures radiales d'extension (9) ;
dans lequel des trous traversants (5) sont formés sur les plaques d'haltères (1), et chacun des trous traversants (5) possède une structure à deux segments, un premier segment étant un trou fileté et un second segment un trou aveugle ; le trou fileté et le trou aveugle sont formés coaxialement sur deux faces opposées des plaques d'haltères (1) ; le trou fileté est doté de manière amovible d'un boulon de positionnement (6), et le trou aveugle sert de rainure d'extension ; un écrou sur le boulon de positionnement (6) est utilisé comme protubérance d'extension pour être inséré axialement et associé au trou aveugle.

2. Haltère lesté extensible selon la revendication 1, **caractérisé en ce qu'**une pluralité de plaques d'haltères (1) sont placées sur les parties de réglage de manière extensible ; les parties de vissage (2) servent à fixer les plaques d'haltères (1) sur un côté extérieur, et les plaques fixes d'haltères servent à fixer les plaques d'haltères (1) sur un côté le plus intérieur.

3. Haltère lesté extensible selon la revendication 1, **caractérisé en ce que** chacune des plaques d'haltères (1) est munie d'au moins deux trous traversants (5) et deux boulons de positionnement (6), et que les trous aveugles sont formés d'un côté distal à la partie de préhension (4) ; les trous aveugles sont formés sur chacune des deux plaques fixes pour haltères.

4. Haltère lesté extensible selon la revendication 1, **caractérisé par** la formation de moletages à la fois sur la partie de préhension (4) et sur les parties de vissage (2).

5. Haltère lesté extensible selon la revendication 1, **caractérisé en ce qu'**un trou de support (7) est formé sur chacune des plaques d'haltères (1), une rainure de retrait (8) pratique est formée au-dessus du trou de support (7), et les rainures de retrait (8) pratiques sur deux plaques d'haltères adjacentes (1) forment un trou de retrait (3) pratique.

6. Haltère lesté extensible selon la revendication 1, **caractérisé en ce que** les parties de réglage sont composées de tubes à manchon (12), et les tubes à manchon (12) sont fixement reliés aux deux extrémités de la partie de préhension (4) ; plusieurs secondes plaques d'insertion (13) sont installées sur une paroi extérieure de chaque tube à manchon (12), et une tige de vis (10) est reliée à l'intérieur et de façon filetée à chacun des tubes de manchon (12) ; une extrémité de la tige de vis (10) est fixement reliée à la partie de vissage (2) ; une extrémité de la tige de vis (10) adjacente à la partie de vissage (2) est un arbre simple, un disque rotatif est prévu sur l'arbre simple, et plusieurs premières plaques d'insertion (11) sont installées sur le disque rotatif ; chacune des premières plaques d'insertion (11) correspond à un espace entre deux secondes plaques d'insertion adjacentes (13) de la pluralité de secondes plaques d'insertion (13).

7. Haltère lesté extensible selon la revendication 6, **caractérisé en ce que** la pluralité de premières plaques d'insertion (11) et la pluralité de secondes plaques d'insertion (13) sont des plaques en forme d'arc ; une première transition en forme d'arc est prévue à un bord d'une extrémité de chacune de la pluralité des premières plaques d'insertion (11) distales au disque rotatif, et une seconde transition en forme d'arc est prévue à un bord d'une extrémité de chacune de la pluralité de secondes plaques d'insertion (13) adjacentes au disque rotatif.
